# EUROPEAN PATENT SPECIFICATION

(11) **EP 0 533 463 B1**
(45) Date of publication and mention of the grant of the patent: **02.07.1997**
(21) Application number: 92308444.6
(22) Date of filing: 16.09.1992
(51) Int. Cl.: G11B 23/03, G11B 23/28

(54) **Disc cartridge with mistaken recording inhibiting mechanism**
Plattenkassette mit Falschaufzeichnungsschutzmechanismus
Cassette à disque avec mécanisme empêchant l'enregistrement erroné

(30) Priority: 17.09.1991 JP 265178/91; 30.09.1991 JP 278630/91
(43) Date of publication of application: 24.03.1993
(73) Proprietor: SONY CORPORATION, Tokyo (JP)
(72) Inventor: Fujisawa, Hirotoshi, c/o Patents Division, Shinagawa-ku, Tokyo 141 (JP); Takahashi, Kenji, c/o Patents Division, Shinagawa-ku, Tokyo 141 (JP)
(74) Representative: Purvis, William Michael Cameron

(56) References cited:
- EP-A- 0 206 897
- EP-A- 0 472 443
- US-A- 4 796 138

## Description

The invention relates to disc cartridges with mistaken recording inhibiting mechanisms.

Such disc cartridges can accommodate discs capable of re-recording information signals, such as magneto-optical discs.

Discs have been proposed, such as magnetic discs and magneto-optical discs, from which information signals once recorded thereon can be erased to permit recording of new information signals.

It is desirable to provide a disc cartridge accommodating a disc of this kind with a mistaken recording inhibiting mechanism to prevent mistaken erasure of information signals once recorded on the disc.

It is possible with such a mistaken recording inhibiting mechanism to make a selection between a state permitting re-recording of information signals and a state inhibiting erasure of the information signals recorded on the disc.

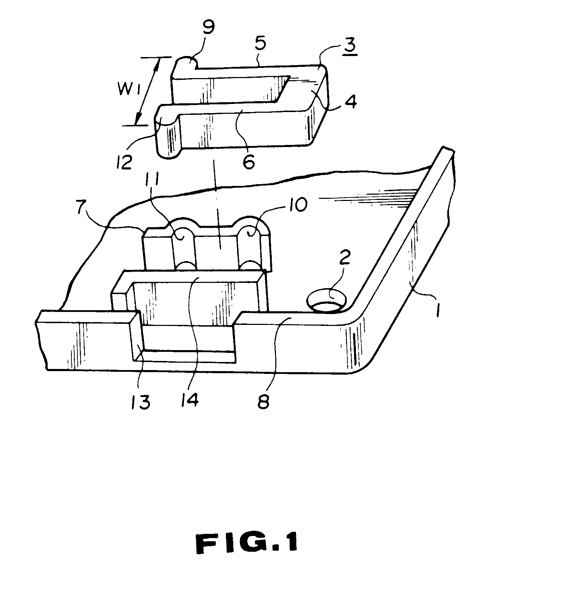

Figure 1 of the accompanying drawings shows a typical arrangement of a mistaken recording inhibiting mechanism for a disc cartridge which make a selection between a re-recordable state and a mistaken recording inhibiting state.

The mistaken recording inhibiting mechanism shown includes a mistaken recording inhibiting member 3 which is movably mounted on a lower half 1 of a cartridge main body to open or close a detection hole 2 extending through a corner of the lower half 1.

The mistaken recording inhibiting member 3 is formed by moulding synthetic resin and has a closure web 4 of a size large enough to close the detecting hole 2 in the lower half 1 and first and second resilient arms 5, 6 extending from opposite ends of the closure web 4 and facing one another.

A slide guide 7 to guide the sliding direction of the mistaken recording inhibiting member 3 is formed upright on the inner surface of the lower half 1. The slide guide 7 is formed substantially parallel to an upright peripheral wall 8 of the lower half 1 constituting the outer wall on a rear side of the cartridge main body.

The surface of the slide guide 7 facing towards the upright peripheral wall 8 is formed with first and second engaging recesses 10, 11 to be engaged by a retention bead 9 formed on an outer lateral surface of the distal end of one of the resilient arms 5 of the mistaken recording inhibiting member 3. The first and second engaging recesses 10, 11 are formed at such positions that the retention beads 9 will be engaged therewith when the mistaken recording inhibiting member 3 has been moved to a position of closing and opening the detection hole 2, respectively.

The upright peripheral wall 8 formed integral with the lower half 1 is formed with an opening 13 to expose to the outside of the cartridge main body a movement actuating member 12 formed on the outer lateral surface on the distal end of the resilient arm 6 of the mistaken recording inhibiting member 3. The opening 13 is of such an extent as to permit the mistaken recording inhibiting member 3 to be moved between a position of closing the detection hole 2 and the position of opening the detection hole 2.

A barrier wall 14 is formed upright within the lower half 1 to face the opening 13.

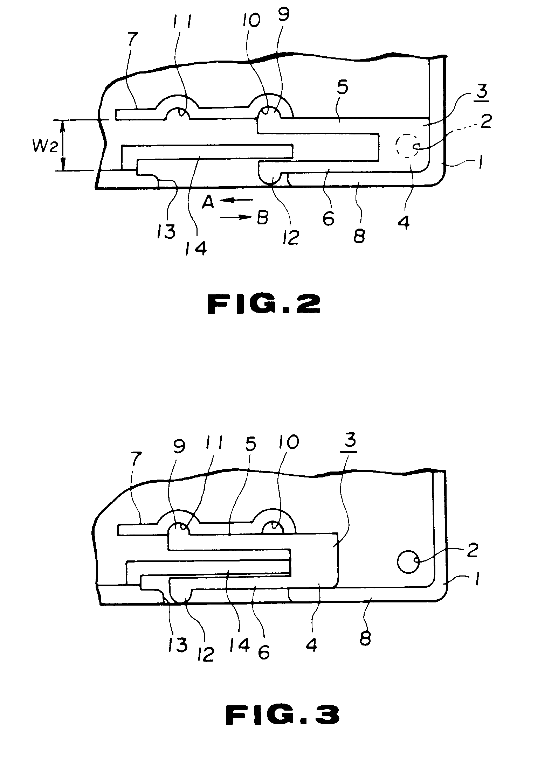

Referring to Figure 2, the mistaken recording inhibiting member 3 is arranged within the lower half 1, with the closure web 4 positioned adjacent the detecting hole 2 and with the resilient arms 5, 7 sprung between the slide guide 7 and the upstanding peripheral wall 8.

A width W₁ between the retention bead 9 and the movement actuating member 12 is selected to be wider than a distance W₂ between the slide guide 7 and the upstanding peripheral wall 8, so that, when the resilient arms 5, 6 are sprung between the slide guide 7 and the upstanding peripheral wall 8, the resilient arms 5, 6 are resiliently deflected towards one another so as to be pressed against the slide guide 7 and the upstanding peripheral wall 8.

The movement actuating member 12 formed on the resilient arm 6 of the mistaken recording inhibiting member 3 provided within the lower half 1 is exposed to the outside of the cartridge main body.

By acting on and sliding the movement actuating member 12 formed on the resilient arm 6 exposed to the outside of the cartridge main body via the opening 13, the mistaken recording inhibiting member 3 mounted within the lower half 1 can be slid in a direction shown by an arrow A or a direction shown by an arrow B in Figure 2, with the resilient arms 5, 6 being guided by the slide guide 7 and the upstanding peripheral wall 8.

When the closure web 4 of the mistaken recording inhibiting member 3 is at the position of closing the detecting hole 2, as shown in Figure 2, the retention bead 9 on the resilient arm 5 is engaged in the first engaging recess 10 to maintain the detecting hole 2 in the closed state. When the mistaken recording inhibiting member 3 is slid in the direction shown by the arrow A in Figure 2 until the closure web 4 reaches the position of opening the detecting hole 2, the retention bead 9 is engaged with the second engaging recess 11 , as shown in Figure 3, to maintain the detecting hole 2 in the opened state.

Meanwhile, the mistaken recording inhibiting member 3 of the mistaken recording inhibiting mechanism is supported by the lower half 1 by having the resilient arms 5, 6 resiliently deflected and pressed against the slide guide 7 and the upstanding peripheral wall 8, and if there should be an error in the width W₁ between the resilient arms 5, 6, the mistaken recording inhibiting member 3 may not be supported by being pressed against the slide guide 7 and the upstanding peripheral wall 8. Thus, if the width W₁ between the resilient arms 5, 6 becomes smaller than the distance W₂ between the slide guide 7 and the upstanding peripheral wall 8, the mistaken recording inhibiting member will no longer be supported between the slide guide 7 and the upstanding peripheral wall 8. The result is that the mistaken recording inhibiting member 3 is ultimately detached from the cartridge main body.

On the other hand, the retention bead 9 is not engaged reliably with the first and second engaging recesses 10, 11, so that the detecting hole 2 cannot be opened or closed reliably and hence the recordable or unrecordable state for information signals cannot be set reliably.

If the mistaken recording inhibiting member 3 is produced by moulding synthetic resin, it is difficult to maintain high dimensional accuracy of the resilient arms 5, 6, so that the above-mentioned problems tend to be produced. If the resilient arms 5, 6 extend from opposite ends of the closure web 4 in a spaced apart relation to each other, the resilient arms 5, 6 tend to be deflected in a direction of narrowing the width W₁ therebetween, that is in a direction of approaching towards each other. This is one of the reasons the above-mentioned problem tend to arise.

According to the invention there is provided a disc cartridge comprising
a cartridge main body accommodating a disc for rotation therein and having a recording/reproducing aperture to expose the disc to outside;
a shutter member movably mounted on one lateral side of the cartridge main body to open or close the recording/reproducing aperture; and
a mistaken recording inhibiting member having a closure part of a size large enough to close a detection hole provided in the cartridge main body, first, second and third arms formed integral with the closure part and a movement actuating part to actuate the mistaken recording inhibiting member into movement between a position of opening the detection hole by the closure part and a position of closing the detection hole by the closure part;
wherein the cartridge main body has a slide guide to guide the mistaken recording inhibiting member in the direction in which the arms extend; the movement actuating part is provided, at a position actuatable from outside via a notch formed in a lateral side of the cartridge main body, on the first arm of the mistaken recording inhibiting member which is positioned most outwardly relative to the cartridge main body; the second arm and the third arm are resilient; the slide guide is engaged by the second and the third arms; and engagement means are provided between the resilient second and third arms of the mistaken recording inhibiting member and the slide guide to define the positions of opening and of closing of the detection hole by the closure part.

The invention is diagrammatically illustrated by way of example in the accompanying drawings, in which:-
Figure 1 is a fragmentary perspective view showing a mistaken recording inhibiting mechanism for a disc cartridge of previously proposed kind;
Figure 2 is a fragmentary plan view showing the mistaken recording inhibiting mechanism of Figure 1, with the mistaken recording inhibiting member closing a mistaken recording detecting hole;
Figure 3 is a fragmentary plan view showing the mistaken recording inhibiting mechanism of Figure 1, with the mistaken recording inhibiting member opening the mistaken recording detecting hole;
Figure 4 is an exploded perspective view of a disc cartridge to which the mistaken recording inhibiting mechanism according to a first embodiment of the invention is applied;
Figure 5 is a perspective view of the disc cartridge of Figure 4, as seen from a front side fitted with a shutter member;
Figure 6 is a perspective view of the disc cartridge of Figure 4, as seen from a rear side;
Figure 7 is a fragmentary exploded perspective view of the disc cartridge of Figure 4 showing the state in which a mistaken recording inhibiting member is retained by a lower half of a cartridge main body;
Figure 8 is a fragmentary plan view of the disc cartridge of Figure 4 showing the state in which the mistaken recording inhibiting member is retained by the lower half of the cartridge main body with a mistaken recording detecting hole being closed;
Figure 9 is a fragmentary plan view of the disc cartridge of Figure 4 showing the state in which the mistaken recording inhibiting member is moved to a position of opening the mistaken recording detecting hole;
Figure 10 is a fragmentary plan view showing a second embodiment of a mistaken recording inhibiting mechanism for a disc cartridge according to the invention;
Figure 11 is a fragmentary plan view showing a third embodiment of a mistaken recording inhibiting mechanism for a disc cartridge according to the invention;
Figure 12 is a fragmentary plan view showing a fourth embodiment of a mistaken recording inhibiting mechanism for a disc cartridge according to the invention;
Figure 13 is a perspective view showing a fifth embodiment of a mistaken recording inhibiting mechanism for a disc cartridge according to the invention;
Figure 14 is a perspective view showing a sixth embodiment of a mistaken recording inhibiting mechanism for a disc cartridge according to the invention;
Figure 15 is a fragmentary plan view showing components of a seventh embodiment of a mistaken recording inhibiting mechanism for a disc cartridge according to the invention;

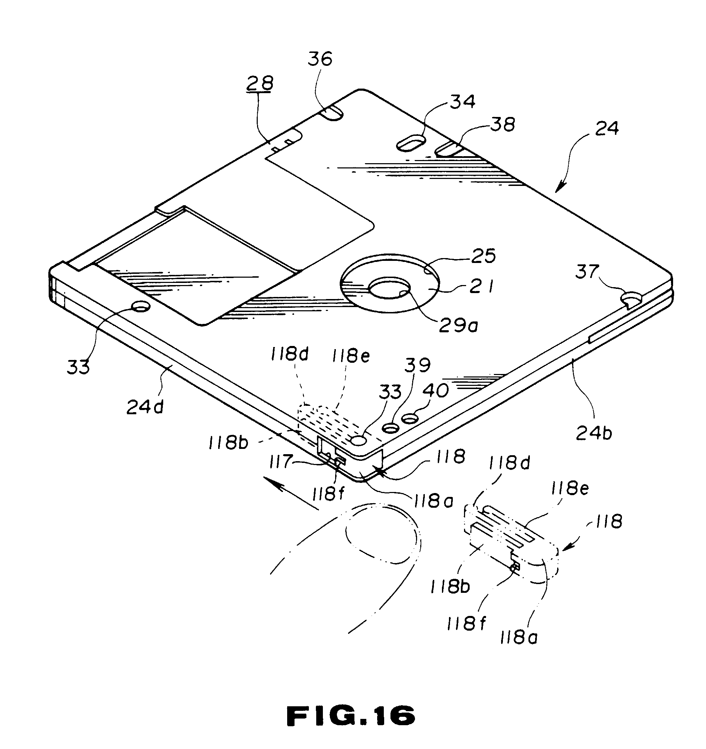

Figure 16 is a perspective view of the mistaken recording inhibiting mechanism of the seventh embodiment of the invention;
Figure 17 is an enlarged plan view showing the mistaken erasure inhibiting state of the seventh embodiment shown in Figure 15;
Figure 18 is a perspective view showing a plurality of disc cartridges each provided with a mistaken recording inhibiting mechanism according to the invention disposed side by side within a cartridge box; and
Figure 19 is a perspective view showing a mistaken recording inhibiting mechanism according to an eighth embodiment of the invention.

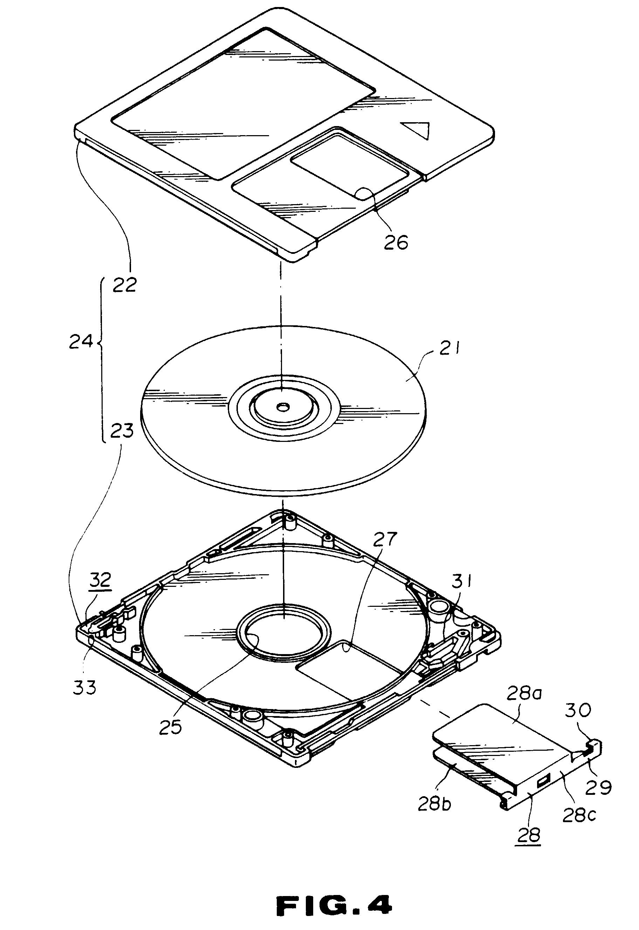

Referring to Figures 4 to 9 the drawings, a disc cartridge accommodates a magneto-optical disc 21 which permits erasure of information signal once recorded thereon and re-recording of new information signals. The disc cartridge includes a cartridge main body 24 formed by abutting and connecting together a rectangular upper half 22 and a rectangular lower half 23. The magneto-optical disc 21 is rotatably accommodated within the cartridge main body 24.

The cartridge main body 24 is formed with a disc drive aperture 25 by means of which may be introduced onto a disc table of a disc rotating and driving device so as rotationally to drive the magneto-optical disc 21 accommodated within the cartridge main body 24 when the disc cartridge is loaded in position within the recording/reproducing apparatus. Specifically, the disc drive aperture 25 is a circular opening formed at the centre of the lower half 23, as shown in Figure 4, to permit an inner peripheral region inclusive of a central aperture 21a of the disc 21 accommodated in the cartridge main body 24 to be exposed to outside. The disc 21 is set on the disc table by the above-mentioned inner peripheral region.

The upper and lower surfaces of the cartridge main body 24, that is the upper half 22 and the lower half 23, are formed with recording/reproducing apertures 26, 27 to expose at least a part of a signal recording region of the disc 21 accommodated in the cartridge main body to outside between the inner and outer peripheries of the disc. The recording /reproducing apertures 26, 27 are rectangular in profile and positioned at a mid part in the transverse direction of the cartridge main body 24 to extend from a position proximate the disc drive aperture 25 to a position lying at a front edge 24a of the cartridge main body 24.

The cartridge main body 24 is provided with a shutter member 28 to close the recording/reproducing apertures 26, 27 to prevent pollutants from intruding into the cartridge main body 24 via the recording/reproducing apertures 26, 27 and becoming deposited on the magneto-optical disc 21 accommodated therein. The shutter member 28 is formed by punching and bending a thin metal sheet into a U-shaped cross-section. The shutter member 28 is made up of shutter plates 28a, 28b to close the recording/reproducing apertures 26, 27 and a connecting web 28c connected to the proximal ends of the shutter plates 28a, 28b. The connecting web 28c is extended at one side thereof by a slide guide 29 to assist parallel movement of the shutter member 28 along the front edge 24a of the cartridge main body 24.

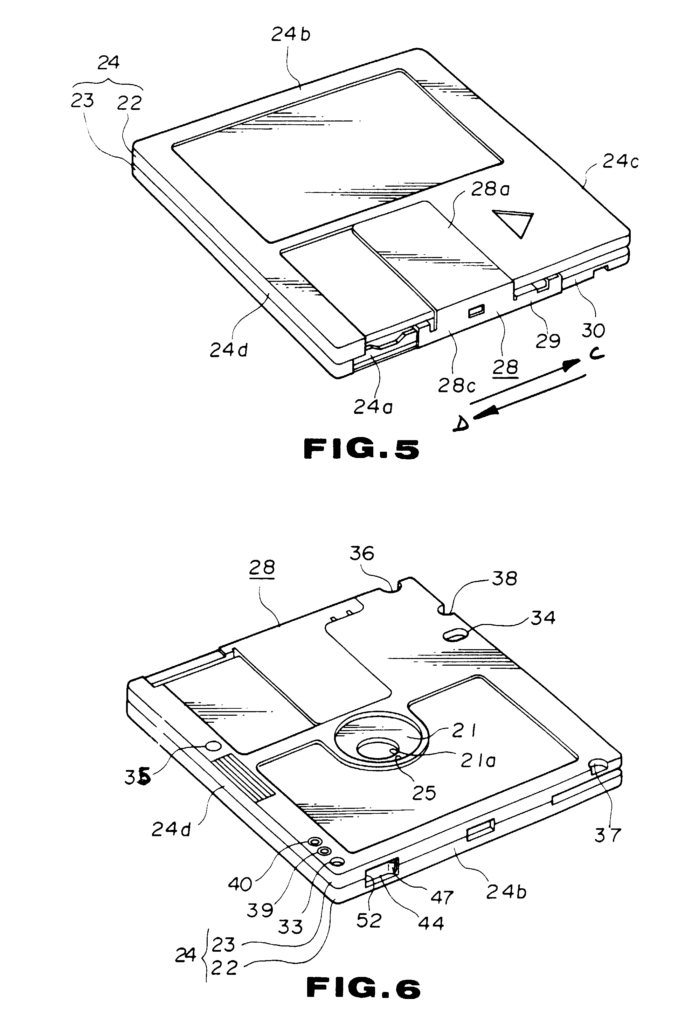

The shutter member 28 is fitted on the front side of the cartridge main body 24, with the shutter plates 28a, 28b overlying the recording/reproducing apertures 26, 27. The shutter member 28 is mounted in this manner on the cartridge main body 24 so as to be moved in the directions shown by arrows C and D in Figure 5 between the position of closing the recording/reproducing apertures 26, 27 and the position of opening the apertures, as shown by solid lines in Figures 5 and 6.

At a corner of the front side of the lower half 23 of the cartridge main body 24 is mounted a shutter locking member 31 which can engage a mating engaging piece 30 formed by bending a portion of the slide guide 29 to hold the shutter member 28 in the closure position to prevent the shutter member 28 from being inadvertently moved from the position of closing the recording/reproducing apertures 26, 27 shown in Figures 5 and 6 to open the apertures 26, 27.

At a corner of a rear side 24b of the cartridge main body 24, diagonally opposite to the corner of the front edge 24a fitted with the shutter locking member 31, a mistaken recording inhibiting member 32 is provided. The mistaken recording inhibiting member 32 is provided on the lower half 23. A detecting hole 33, which can be opened and closed by the mistaken recording inhibiting member 32, is formed at the corner of the rear side 24b provided with the mistaken recording inhibiting member 32. That is, the detecting hole 33 extends through the lower major surface of said corner of the rear side 24b of the cartridge main body 24, as shown in Figure 6.

Referring to Figure 6, the lower major surface of the cartridge main body 24 provided with the detecting hole 33 has pin-engaging holes 34, 35 to be engaged by positioning pins, not shown, adapted for setting the loading position of the disc cartridge on loading the disc cartridge in a cartridge loading section within the recording/reproducing apparatus. These pin-engaging holes 34, 35 are formed at the corners on the front edge 24a fitted with the shutter member 28 which is opposite to the rear side 24b formed with the detecting hole 33. The lower major surface of the cartridge main body 24 is formed with engaging recesses 36, 37 to be engaged by a cartridge holding pawl, not shown, of an automatic loading mechanism used automatically to load the disc cartridge on a cartridge loading unit within recording/reproducing apparatus. The engaging recesses 36, 37 are situated towards a lateral side 24c which is at right angles to the lateral side 24a of the cartridge main body 24 fitted with the shutter member 28 and which is a leading side when inserting the cartridge into the cartridge loading unit. The engaging recesses 36, 37 are formed from the lower major surface towards the front side 24a and towards the rear side 24b.

The lower major surface of the cartridge main body 24 is also formed with an indicating recess 38 to indicate that the disc accommodated within the cartridge main body 24 is a magneto-optical disc 21. The indicating recess 38 is formed at a position on the lateral side 24c which is proximate to the front edge 24a.

The lower major surface of the cartridge main body 24 is formed with disc type discriminating holes 39, 40 to discriminate the type of disc accommodated within the cartridge main body 24, as shown in Figure 6. The holes 39, 40 are situated towards a lateral side 24d opposite to the lateral side 24c in alignment with the detecting hole 33.

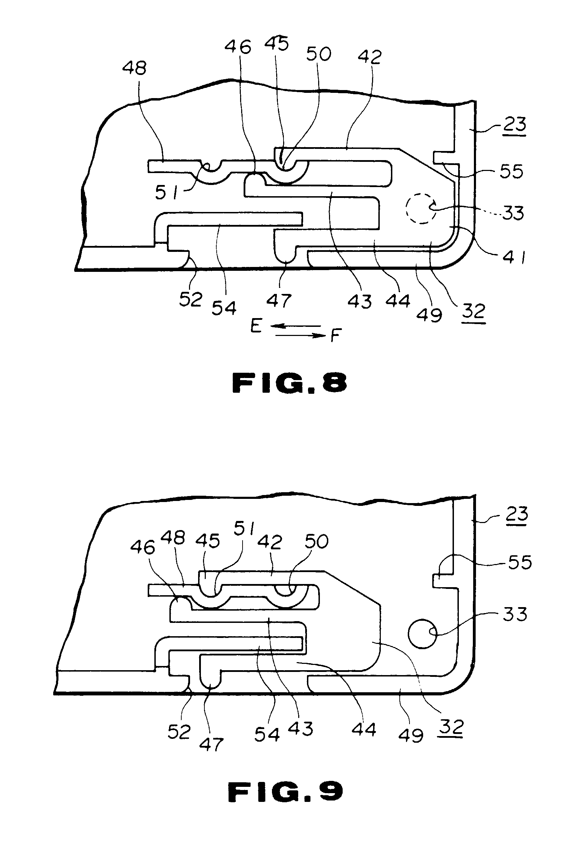

The mistaken recording inhibiting member 32, provided within the cartridge main body 24, is moulded from synthetic resin, and has a substantially square closure web 41 at the proximal side which is at least of a size such that it can close the detecting hole 33, as shown in Figure 8. Extending from the one end face of the closure web 41 are a pair of resiliently deflectable resilient arms 42, 43 arranged side by side and a movement actuating arm 44, forming a movement actuating member, disposed substantially parallel to the resilient arms 42, 43.

The resilient arms 42, 43 are of different lengths with the resilient arm 43 longer than the resilient arm 42. Retention beads 45, 46 are formed at the distal ends of the resilient arms 42, 43 and extend towards one another.

A movement actuating bead 47 is formed at the distal end of the movement actuating arm 44 to extend outwardly, that is in a direction away from the beads of the resilient arms 42, 43.

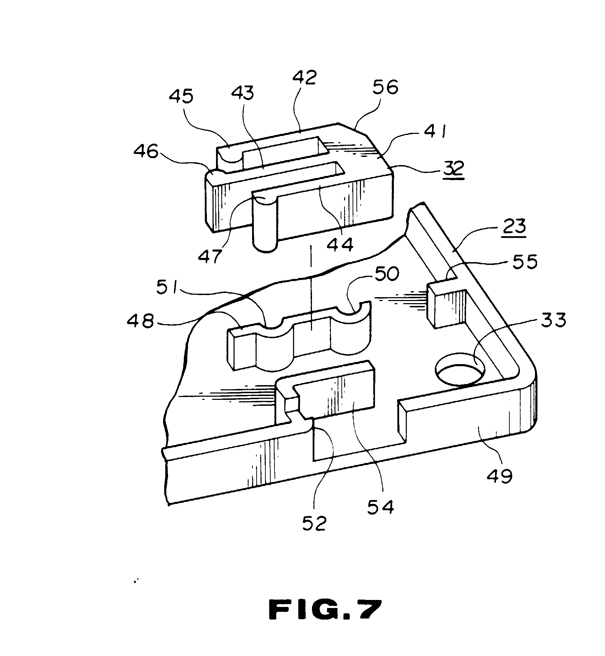

On the inner surface of the lower half 23 of the cartridge main body 24 provided with the mistaken recording inhibiting member 32, an upstanding slide guide 48 is provided to guide the resilient arms 42, 43 of the mistaken recording inhibiting member 32 during movement thereof and also to be clamped by the resilient arms 42, 43, as shown in Figure 7. The slide guide 48 is formed parallel to an upstanding peripheral wall 49 on the lower half 23 which forms part of a wall surface of the rear side 24b of the cartridge main body 24.

The slide guide 48 is formed with first and second engaging recesses 50, 51 to be engaged by the retention bead 45 at the distal end of the resilient arm 42. These first and second engaging recesses 50, 51 are formed by arcuately bending part of the slide guide 48 at positions at which the engaging recesses are to be engaged by the retention bead 45 when the mistaken recording inhibiting member 32 is moved to positions of closing and opening the detecting hole 33.

The rear side 24b of the cartridge main body 24 is formed with a notch 52 to permit the movement actuating bead 47 of the movement actuating arm 44 to protrude outwardly in a direction away from the resilient arms 42, 43. The notch 52 is formed by partially cutting away the upstanding peripheral wall 49 of the upper and lower halves 22, 23 making up the wall of the rear side 24b of the cartridge main body 24. The notch 52 is of a width to permit the mistaken recording inhibiting member 32 to be moved between a position of closing the detecting hole 33 and a position of opening the detecting hole 33.

A barrier wall 54 is formed within the lower half 52 facing the notch 52. The barrier wall 54 controls the resilient deflection of the movement actuating arm 44 towards the inside of the cartridge main body 24, while controlling access to the inside of the cartridge main body 24 by covering the notch 52.

The mistaken recording inhibiting member 2 is situated on the inner surface of the lower half 23, as can be seen in Figure 8, with the closure web 41 lying towards the detecting hole 33 and with the resilient arms 42, 43 clamping the slide guide 48, the movement actuating arm 44 extending between the upstanding peripheral wall 49 and the barrier wall 54.

Since the mistaken recording inhibiting member 32, thus provided within the lower half 23, holds the slide guide 48 by the resilient arms 42, 43, it is held positively by the lower half 23 without being readily detached therefrom. With the mistaken recording inhibiting member 32 thus arranged on the lower half 23, the mistaken recording inhibiting member 32 is exposed to the outside of the cartridge main body 24 via the notch 52.

With the mistaken recording inhibiting member 32 thus held by the lower half 23 and arranged within the cartridge main body 24, the movement actuating bead 47 exposed to the outside of the rear side 24b of the cartridge main body 24 via the notch 52 may be acted upon to slide the mistaken recording inhibiting member 32 in the directions shown by arrow E and arrow F in Figure 5, with the resilient arms 42, 43 being then guided by the slide guide piece 48.

When the closure web 41 is in the position of closing the detecting hole 33, the retention bead 45 formed at the distal end of the resilient arm 42 is engaged in the engaging recess 50 formed in the slide guide 48,as shown in Figure 8, to maintain the detecting hole 33 in the closed state.

With the detecting hole 33 thus closed by the closure web 32, mistaken recording detection means provided in the recording/reproducing apparatus is prevented from intruding into the detecting hole 33 and information signals can be recorded on the magneto-optical disc 21 accommodated within the cartridge main body 24.

When the mistaken recording inhibiting member 32 is slid in the direction shown by arrow E in Figure 8 until the closure web 41 reaches the position of opening the detecting hole 33, the retention bead 45 formed at the distal end of the resilient arm 42 is engaged in the second engaging recess 51 formed in the slide guide 48 to maintain the detecting hole 33 in the opened state.

With the detecting hole 33 thus opened by the mistaken recording inhibiting member 32, the detecting hole 33 is detected by mistaken recording detecting means provided in the recording/reproducing apparatus and recording of information signals on the magneto-optical disc 21 accommodated in the cartridge main body 24 is inhibited.

The lower half 23 is provided with a guide lug 55 positively to guide the mistaken recording inhibiting member 32 in the direction of closing the detecting hole 33 when the mistaken recording inhibiting member 32 is moved in the direction of closing the detecting hole 33 as shown by arrow F in Figure 8. An inclined guide surface 56 adapted to be guided by the guide lug 55 is formed on the mistaken recording inhibiting member 32 by chamfering the corner of the closure web 41.

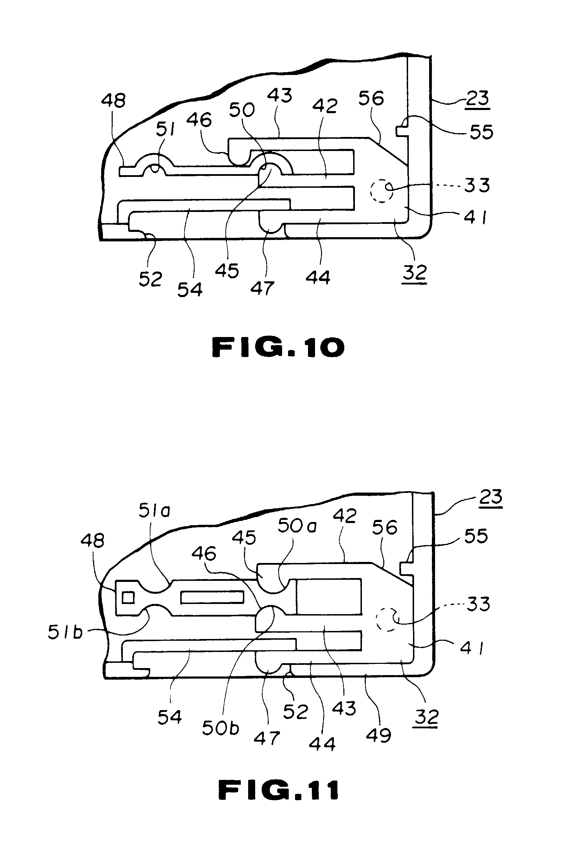

Although the resilient arm 42 having the retention bead 45 to be engaged by the first and second engaging recesses 50, 51 formed in the slide guide 48 is provided on the outer side in the above-described first embodiment, the relative disposition of the resilient arms 42, 43 may be reversed as shown in a second embodiment, illustrated in Figure 10. In such case, the first and second guide recesses 50, 51 are formed in the slide guide 48 to extend into the opposite surface with respect to the first embodiment.

In the above-described embodiments, the slide guide 48 is partially extended arcuately to define the first and second engaging recesses 50, 51, while the resilient arms 42, 43 are of different lengths so that only the retention bead 45 formed at the distal end of the resilient arm 42 is engaged in the first and second engaging recesses 50, 51. In a third embodiment, shown in Figure 11, the slide guide 48 is formed on both its sides with grooves 50a, 50b, 51a, 51b to define the first and second engaging recesses 50, 51. In this embodiment, the resilient arms 42, 43 are of the same length. By forming the resilient arms 42, 43 and the first and second engaging recesses 50, 51 in the above-described manner, the retention beds 45, 46 at the distal ends of the resilient arms 42, 43 are engaged in the first and second engaging recesses 50, 51, so that both the resilient arms 42, 43 play the role of clamping the slide guide 48 and positioning the mistaken recording inhibiting member 32.

The engaging system for relative engagement between the resilient arms 42, 43 holding the mistaken recording inhibiting member 32 in the position of closing the detecting hole 33 and the position of opening the detecting hole 33 may also be reversed from the disposition shown in the above embodiments.

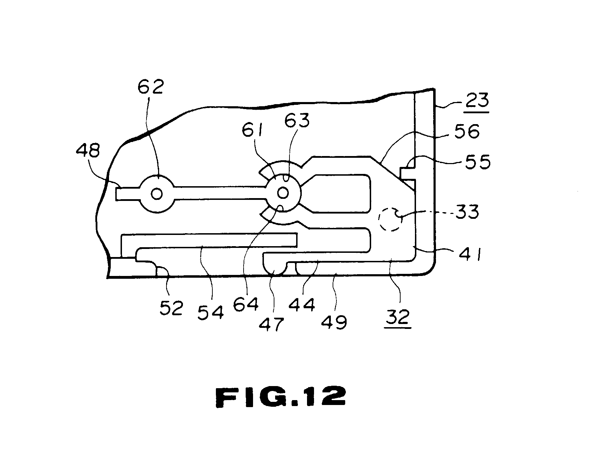

That is, as shown in Figure 12 as a fourth embodiment, part of the slide guide 48 may be arcuately extended to form first and second bulging portions 61, 62, while the distal end parts of the resilient arms 42, 43 may be formed with engaging recesses 63, 64 adapted for being mated with the first and second bulging portions 61, 62 so that the mistaken recording inhibiting member 32 may be maintained in the position of closing or opening the detecting hole 33 by engagement of the first and second bulging portions 61, 62 with the engaging recesses 63, 64.

Although the foregoing description has been made with reference to an example of a disc cartridge comprising the cartridge main body 24 accommodating the magneto-optical disc 21 therein, the invention may also be applied to disc cartridges in general which accommodate discs capable of recording information signals.

In the above-described embodiments of the mistaken recording inhibiting system, the movement actuating part of the mistaken recording inhibiting member can be acted upon via the notch formed in the lateral surface of the cartridge main body. However, in the above embodiments, since the notch is of a small size, it is extremely difficult to catch the actuating part of the mistaken recording inhibiting member with a finger or fingernail to cause the desired movement of the mistaken recording inhibiting member.

A modification of the invention which has overcome this inconvenience is hereinafter explained.

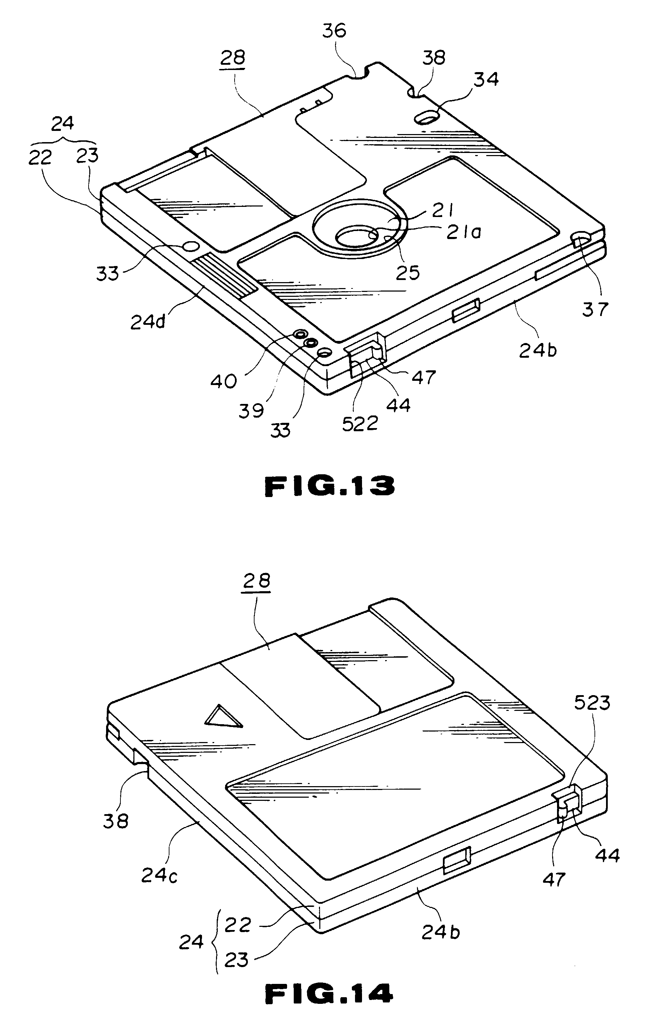

Figure 13 shows a mistaken recording inhibiting system according to a fifth embodiment and components which are common with those of the preceding embodiments are indicated by the same numerals and reference should be had to the description of the preceding embodiments. In Figure 13, 522 is a notch which is formed in the rear side 24b of the cartridge main body 24 and through which a mistaken recording inhibiting member actuating arm 44 may be acted upon by a finger or fingernail. The notch 522 is formed to extend from the major surface of the lower half 23 to the rear side 24b of the cartridge main body 24. Since the notch 522 may be increased in size as compared to the notch of the preceding embodiment, the mistaken recording inhibiting member 44 may be actuated more easily without regard to the size of the finger or fingernail.

Figure 14 shows a sixth embodiment of the mistaken recording inhibiting member of a disc cartridge and parts or components which are used in common with the preceding embodiments are indicated by the same numerals and reference should be had to the description of the preceding fourth embodiment.

In Figure 14, 523 is a notch which is formed in the rear side 24b of the cartridge main body 24 and through which a mistaken recording inhibiting member actuating arm 44 and member may be acted upon by a finger or fingernail. The notch 523 is formed to extend from the major surface of the upper half 22 to the rear side 24b of the cartridge main body 24. Since the notch 523 may be increased in size as compared to the notch of the preceding embodiment, the mistaken recording inhibiting member actuating member 47 may be actuated more easily as in the preceding fifth embodiment.

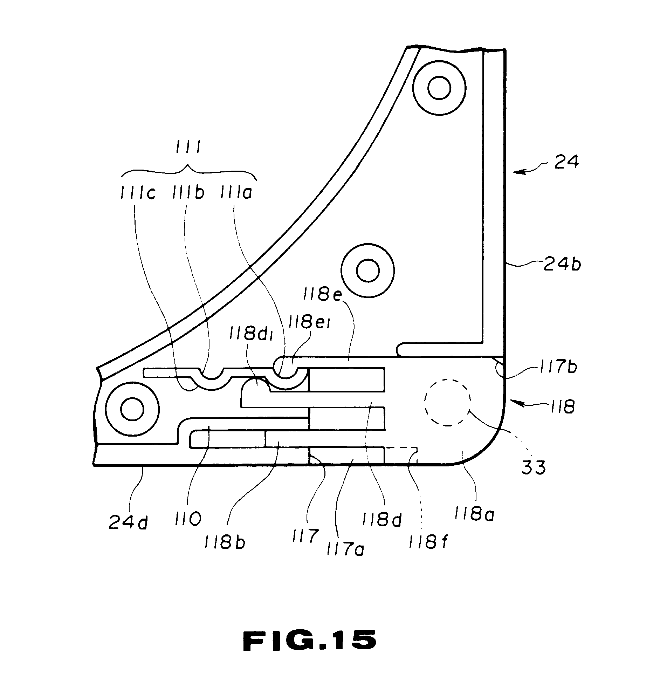

In a mistaken recording inhibiting system for a disc cartridge according to a seventh embodiment of the invention and shown in Figure 15, a notch 117 to act on a mistaken recording inhibiting member 118 is formed on end surfaces from the end of the rear side 24b towards the end of the lateral side 24d of the cartridge main body 24. The notch 117 has a rear side notch section 117b on the rear side 24b and a lateral side notch section 117a on the lateral side 24d. The rear side notch section 117a on the lateral side 24d is of a length which will permit the mistaken recording inhibiting member 118 to be moved between a lateral side position with respect to the detecting hole 33 and an open position of the detecting hole 33, while the rear side notch section 117b on the lateral side 24d is of a length corresponding to the width of a base section 118a which is the main body section of the mistaken recording inhibiting member 118. A supporting piece 110 and an engaging piece 111 are arranged forwardly from the lateral notch section 117a of the notch 117.

The mistaken recording inhibiting member 118, arranged within the notch 117, has a first engaging extension 118b slidably introduced into a space between the rear side 24b of the cartridge main body 24 and the supporting piece 110 so as to be slidable in the fore-and-aft direction, while having second and third engaging extensions 118d, 118e associated with the engaging piece 111. The outer lateral surface of the end of the base part 118a of the mistaken recording inhibiting member 118 has its end exposed at the lateral notch section 117a of the notch 117 so as to be flush with the rear side 24b, while the rear end face thereof is exposed at the rear notch section 117b so as to be flush with the lateral side 24d. With the base section 118a covering the detecting hole 33, the outer lateral surface and the rear end face thereof make up a part of the corner of the cartridge main body 24. The outer lateral surface of the base section 118a of the mistaken recording inhibiting member 118 is provided with a recessed finger rest on which a finger may be applied in parallel state with respect to the upper and lower surfaces of the cartridge main body 24.

The above-described mistaken recording inhibiting system of the seventh embodiment operates as follows.

When recordal of information signals is desired, the mistaken recording inhibiting member 118 is so arranged that the base section 118a thereof is positioned at a corner of the cartridge main body 24, that is, the rear end face thereof is flush with the lateral side 24d, with the detecting hole 33 being closed (Figure 15). In this position of the mistaken recording inhibiting member 118, the bead 118d' of the second engaging extension 118d abuts an outer lateral surface 111c of the engaging piece 111 of the cartridge main body 24, while a bead 118e' of the third engaging extension 118e is engaged in a recess 111a of the engaging piece 111, so that the mistaken recording inhibiting member 118 is retained and held with respect to the cartridge main body 24 by the clamping of the engaging piece 111 by the engaging extensions 118d, 118e.

When erasing of incorrect recording after recording is desired, the base section 118a of the mistaken recording inhibiting member 118 is thrust in a forward direction from the lateral side 24d of the cartridge main body 24 by a finger applied in a parallel state relative to the upper and lower surfaces of the cartridge main body 24.

In this manner, the mistaken recording inhibiting member 118 is moved so that the first engaging extension 118b is introduced deep into a space between the supporting piece 110 and the rear side 24b of the cartridge main body 24, while the second engaging extension 118d is slid along the outer lateral surface 111c of the engaging piece 111. On the other hand, the third engaging extension 118e is disengaged from the rear recess 111a of the engaging piece 111 and retained by being engaged with the forward recess 111b.

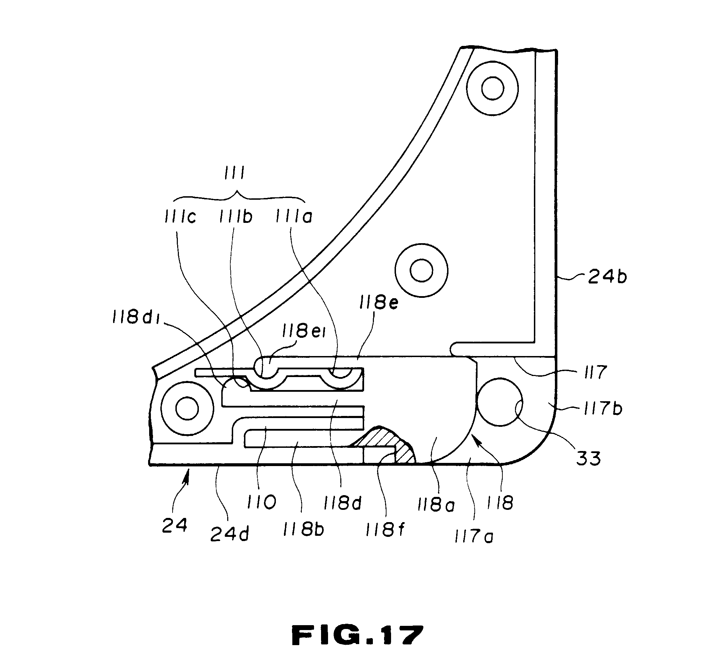

The result is that the base section 118a of the mistaken recording inhibiting member 118 is introduced from the rear side 24b of the cartridge main body 24 into the interior thereof while the base section is maintained in a flush state relative to the lateral side 24d of the cartridge main body 24. In this manner, the detecting hole 33 is opened to permit intrusion of the mistaken recording inhibition detecting pin of the recording/reproducing apparatus (Figure 17).

For resetting the cartridge main body 24 from the mistaken recording inhibiting position to the recordable position, the mistaken recording inhibiting member 118 is thrust towards the rear side 24b by applying a finger at a finger rest 118f formed on the outer lateral surface of the base section 118a in a direction parallel to the upper and lower surfaces of the cartridge main body 24.

Since the notch 117 is formed in the seventh embodiment to extend from the rear side 24b to the lateral side 24d of the cartridge main body 24, the finger's end may be introduced easily and a positive operation may be assured even if the fingernail is only short. Inhibition of mistaken recording and resetting from the state of inhibition of mistaken recording to the recordable state may be achieved by simply moving the end of the finger in a direction at right angles to the bending direction of the finger without the necessity of employing a pointed operating tool.

Above all, the mistaken recording inhibiting operation by the mistaken recording inhibiting member may be achieved easily so that the disc cartridge may be set to the mistaken recording inhibiting state easily and positively.

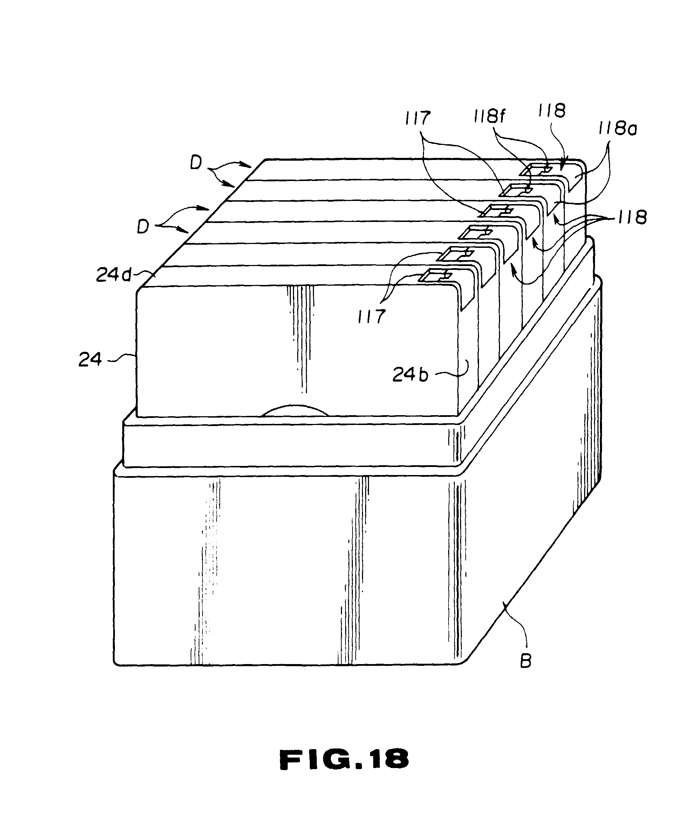

In addition, in the seventh embodiment, since feasibility of recording/reproduction may be checked depending on whether or not the mistaken recording inhibiting member 118 is retracted into the inside of the cartridge main body 24, it is possible to check for feasibility of recording/reproduction of a plurality of disc cartridges placed side by side in a box B as shown in Figure 18.

In the seventh embodiment, the finger rest 118f is formed on the surface of the base section 118a of the mistaken recording inhibiting member 118. Alternatively, the lateral end side of the notch section 117a of the notch 117 of the cartridge main body 24 may be formed with a gap by which the end of a finger may be inserted between it and the base section 118a of the mistaken recording inhibiting member 118 moved to the open position.

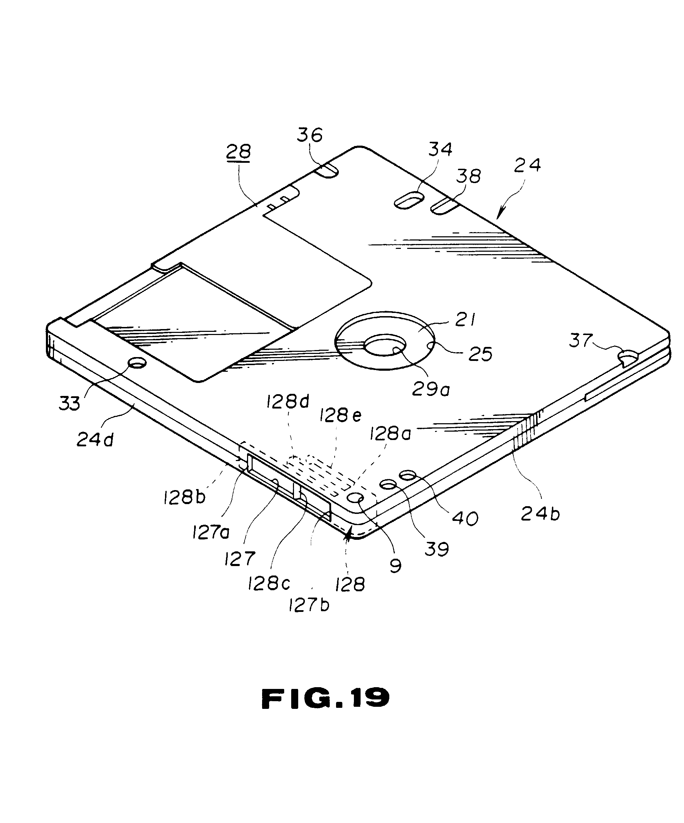

Referring to Figure 19, an eighth embodiment of the invention is explained and parts or components similar to those of the seventh embodiment are indicated by the same numeral and detailed description thereof is omitted.

With the mistaken recording inhibiting system of the disc cartridge of the present eighth embodiment, a notch 127 is formed only in the lateral side 24d of the cartridge main body 24 to extend a longer distance forwardly from the vicinity of the detecting hole 33, that is, the notch 127 has a length longer than that of the notch of the preceding embodiment.

A mistaken recording inhibiting member 128 associated with the notch 127 has a closure part 128a and is positioned in its entirety in the cartridge main body 24. A first engaging extension 128b is flush with the lateral surface of the base section 128a and is of a length longer than a second engaging extension 128d and a third engaging extension 128e, so that it is of a length long enough to close the notch 127. A finger rest 128c is formed at a mid part of the outer lateral surface of the first engaging extension 128b. The finger rest 128c is formed on the first engaging extension 128b at such a position that, when the mistaken recording inhibiting member 128 is moved to a position of closing the detecting hole 33, the end of a fingernail can be inserted between the finger rest 128c and a rear edge 127b of the notch 127 in parallel with the upper and lower surfaces of the cartridge main body 24 and, when the mistaken recording inhibiting member 128 is moved to a position of opening the detecting hole 33, the end of a fingernail may be inserted between the finger rest and a forward edge 127a of the notch 127 in parallel with the upper and lower surfaces of the cartridge main body 24.

Since the notch 127 is formed with a long length in the fore-and-aft direction of the lateral wall of the cartridge main body 24, the end of a fingernail may be inserted in a position parallel to the upper and lower surfaces of the cartridge main body 24, similarly to the first embodiment, to catch the mistaken recording inhibiting member 128, while mistaken erasure may be inhibited by simply moving the end of a fingernail in a direction at right angles to the bending direction of the finger.

With the above-described mistaken recording inhibiting system for the disc cartridge according to the invention, since the mistaken recording inhibiting member can be moved by guiding the resilient arms separated from the movement actuating member by the slide guide provided in the cartridge main body, stable movement may be achieved.

Besides, since the mistaken recording inhibiting member is arranged within the cartridge main body with the slide guide being clamped by the resilient arms, the mistaken recording inhibiting member may be positively maintained within the cartridge main body without the risk of detachment during and after assembling of the disc cartridge.

In addition, the mistaken recording inhibiting member may be maintained in the positions of opening or closing the mistaken recording detecting hole by engagement with engaging means provided between at least one of the resilient arms and the slide guide, so that the recordable state permitting recording of information signals and the mistaken recording inhibiting state may be established reliably.

Above all, since the mistaken recording inhibiting member is arranged within the cartridge main body and designed for clamping the slide guide by the resilient arms separated from the movement actuating part, the mistaken recording inhibiting member may be maintained within the cartridge main body, with the slide guide being positively clamped by the resilient arms, even when it is moulded from synthetic resin.

Since the mistaken recording detecting hole is formed in the major surface of the cartridge main body and the movement actuating section for actuating the mistaken recording inhibiting member into movement is exposed to the rear surface which is at right angles to the major surface of the cartridge main body, the mistaken recording inhibiting member may be reduced in size and the housing space within the cartridge main body may be diminished so that the present system may be applied advantageously to small-sized disc cartridges.

## Claims

1. A disc cartridge comprising
a cartridge main body (24) accommodating a disc (21) for rotation therein and having a recording/reproducing aperture (27) to expose the disc to outside;
a shutter member (28) movably mounted on one lateral side (24a) of the cartridge main body to open or close the recording/reproducing aperture; and
a mistaken recording inhibiting member (32, 118, 128) having a closure part (41, 118a, 128a) of a size large enough to close a detection hole (33) provided in the cartridge main body (24), first, second and third arms (44, 42, 43, 44, 118b, 118d, 118e, 128d, 128e) 128e) formed integral with the closure part (41, 118a, 128a) and a movement actuating part (47, 118f, 128c) to actuate the mistaken recording inhibiting member into movement between a position of opening the detection hole (33) by the closure part (41, 118a, 128a) and a position of closing the detection hole (33) by the closure part;
wherein the cartridge main body (24) has a slide guide (48, 111) to guide the mistaken recording inhibiting member in the direction in which the arms extend; the movement actuating part (47, 118f, 128c) is provided, at a position actuatable from outside via a notch (52, 117, 127) formed in a lateral side (24b) of the cartridge main body, on the first arm (44, 118b, 128b) of the mistaken recording inhibiting member which is positioned most outwardly relative to the cartridge main body; the second arm (42, 118d, 128d) and the third arm (43, 118e, 128e) are resilient; the slide guide (48, 111) is engaged by the second and the third arms; and engagement means (45, 46, 50, 51, 61, 62, 63, 64, 111a, 111b, 118e₁, 118e₂) are provided between the resilient second and third arms of the mistaken recording inhibiting member and the slide guide (48, 111) to define the positions of opening and of closing of the detection hole (33) by the closure part (41, 118a, 128a).

2. A disc cartridge according to claim 1, wherein the engaging means has an engagement holding part to hold the mistaken recording inhibiting member at a first position of opening the detecting hole in the cartridge main body and a second position of closing the detecting hole.

3. A disc cartridge according to claim 2, wherein the engaging holding part has an engaging bead (45, 47, 61, 62, 111a, 111b) formed in one of the resilient arms and the slide guide and an engaging recess (50, 51, 63, 64, 118e₁, 118d₁) to be engaged with the engaging bead.

4. A disc cartridge according to claim 1, wherein the notch (117) formed in the lateral side of the cartridge main body is formed so as to extend from a major surface to a lateral side (24b) of the cartridge main body.

5. A disc cartridge according to claim 1, wherein the notch is formed in the lateral side (24b) of the cartridge main body which is opposite to the lateral side (24b) fitted with the shutter member (28).

## Patentansprüche

1. Plattenkassette, mit,
einem Kassettenhauptkörper (24), der eine Platte (21) zwecks Drehung darin beherbergt und eine Aufzeichnungs/Wiedergabeöffnung (27) besitzt, um die Platte nach außen hin freizulegen;
einer Blende (28), die verschiebbar auf einer seitlichen Seite (24a) des Kassettenhauptkörpers befestigt ist, um die Aufzeichnungs-/Wiedergabeöffnung zu öffnen oder zu schließen; und
einem Falschaufzeichnungsschutzteil (32, 118, 128), welches ein Schließteil (41, 118a, 128a) mit einer Größe hat, das groß genug ist, ein Ermittlungsloch (33), welches im Kassettenhauptkörper (24) vorgesehen ist, zu verschließen, einen ersten, zweiten und dritten Arm (44, 42, 43, 44, 118b, 118d, 118e, 128b, 128d, 128e), die einstückig mit dem Schließteil (41, 118a, 128a) ausgebildet sind, und ein Verschiebebetätigungsteil (47, 118f, 128c), um das Falschaufzeichnungsschutzteil in Bewegung zu versetzen zwischen einer Position zum Öffnen des Ermittlungslochs (33) durch das Schließteil (41, 118a, 128a) und einer Position zum Schließen des Ermittlungslochs (33) durch das Schließteil;
wobei der Kassettenhauptkörper (24) eine Gleitführung (48, 111) hat, um das Falschaufzeichnungsschutzteil in der Richtung, in die die Arme sich erstrecken, zu führen; das Verschiebebetätigungsteil (47, 118f, 128c), das von der Außenseite über eine Aussparung (52, 117, 127), welche in einer seitlichen Seite (24b) des Kassettenhauptkörpers gebildet ist, betätigbar ist, an einer Position auf dem ersten Arm (44, 118b, 128b) des Falschaufzeichnungsschutzteils vorgesehen ist, welche am meisten außen in bezug auf den Kassettenhauptkörper angeordnet ist; der zweite Arm (42, 118d, 128d) und der dritte Arm (43, 118e, 128e) federnd sind; die Gleitführung (48, 111) durch den zweiten und dritten Arm erfaßt wird; und eine Eingriffseinrichtung (45, 46, 50, 51, 61, 62, 63, 64, 111a, 111b, 118e₁, 118e₂) zwischen dem federnden zweiten und dritten Arm des Falschaufzeichnungsschutzteils und der Gleitführung (48, 111) vorgesehen sind, um die Position zum Öffnen und die Position zum Schließen des Ermittlungslochs (33) durch das Schließteil (41, 118a, 128a) festzulegen.

2. Plattenkassette nach Anspruch 1, wobei die Eingriffseinrichtung ein Eingriffshalteteil hat, um das Falschaufzeichnungsschutzteil an einer ersten Position zum Öffnen des Ermittlungslochs im Kassettenhauptkörper und einer zweiten Position zum Schließen des Ermittlungslochs zu halten.

3. Plattenkassette nach Anspruch 2, wobei das Eingriffshalteteil einen Eingriffswulst (45, 47, 61, 62, 111a, lllb) hat, der in einem aus den Federarmen und der Gleitführung gebildet ist, und die Eingriffsausnehmung (50, 51, 63, 64, 118e₁, 118d₁) vom Eingriffswulst erfaßt wird.

4. Plattenkassette nach Anspruch 1, wobei die Aussparung (117), die in der seitlichen Seite des Kassettenhauptkörpers gebildet ist, so ausgebildet ist, daß sie sich von einer Hauptfläche zu einer seitlichen Seite (24b) des Kassettenhauptkörpers erstreckt.

5. Plattenkassette nach Anspruch 1, wobei die Aussparung in der seitlichen Seite (24b) des Kassettenhauptkörpers gebildet ist, die gegenüber der seitlichen Seite (24b) liegt, an der die Blende (28) befestigt ist.

## Revendications

1. Cartouche de disque comportant
un corps principal de cartouche (24) renfermant un disque (21) pour rotation et ayant une ouverture d'enregistrement/reproduction (27) destinée à exposer le disque à l'extérieur;
un élément de volet (28) monté de façon mobile sur un côté latéral (24a) du corps principal de cartouche afin d'ouvrir ou fermer l'ouverture d'enregistrement/ reproduction; et
un élément de prévention d'enregistrement erroné (32, 118, 128) ayant une partie de fermeture (41, 118a 128a) d'une taille suffisamment grande pour fermer un trou de détection (33) prévu dans le corps principal de cartouche (24), des premier, deuxième et troisième bras (44, 42, 43, 44, 118b 118d 118e 128b 128d 128e) formés d'un seul tenant avec la partie de fermeture (41, 118a 128a) et une partie d'actionnement de déplacement (47, 118f 128c) destinée à actionner l'élément de prévention d'enregistrement erroné en déplacement entre une position d'ouverture du trou de détection (33) par la partie de fermeture (41, 118a 128a) et une position de fermeture du trou de détection (33) par la partie de fermeture;
le corps principal de cartouche (24) ayant un guide de coulissement (48, 111) destiné à guider l'élément de prévention d'enregistrement erroné dans la direction dans laquelle les bras s'étendent; la partie d'actionnement de déplacement ((47, 118f 128c) étant prévue, dans une position d'actionnement depuis l'extérieur par l'intermédiaire d'une encoche (52, 117, 127) formée dans un côté latéral (24b) du corps principal de cartouche, sur le premier bras (44, 118b 128b) de l'élément de prévention d'enregistrement erroné qui est positionné le plus à l'extérieur par rapport au corps principal de cartouche; le deuxième bras (42, 118d 128b) et le troisième bras (43, 118e 128e) étant élastiques; le guide de coulissement (48, 111) étant engagé par les deuxième et troisième bras; et des moyens d'engagement (45, 46, 50, 51, 61, 62, 63, 64, 111a, 111b, 118e1, 118e2) étant prévus entre les deuxième et troisième bras élastiques de l'élément de prévention d'enregistrement erroné et le guide de coulissement (48, 111) afin de définir les positions d'ouverture et de fermeture du trou de détection (33) par la partie de fermeture (41, 118a 128a).

2. Cartouche de disque selon la revendication 1, dans laquelle les moyens d'engagement possèdent une partie de maintien d'engagement destinée à maintenir l'élément de prévention d'enregistrement erroné dans une première position d'ouverture du trou de détection dans le corps principal de cartouche et une deuxième position de fermeture du trou de détection.

3. Cartouche de disque selon la revendication 2, dans laquelle la partie de maintien d'engagement possède un bourrelet d'engagement (45, 47, 61, 62, 111a 111b) formé dans un des bras élastiques et le guide de coulissement et un renfoncement d'engagement (50, 51, 63, 64, 118e1, 118d1) destiné à être engagé avec le bourrelet d'engagement.

4. Cartouche de disque selon la revendication 1, dans laquelle l'encoche (117) formée dans le côté latéral du corps principal de cartouche est formée de façon à s'étendre depuis une surface principale jusqu'à un côté latéral (24b) du corps principal de cartouche.

5. Cartouche de disque selon la revendication 1, dans laquelle l'encoche est formée dans le côté latéral (24b) du corps principal de cartouche qui est opposé au côté latéral (24b) équipé de l'élément de volet (28).
